Europäisches Patentamt

European Patent Office

Office européen des brevets

(11) Veröffentlichungsnummer: **0 161 664**
A2

# (12) EUROPÄISCHE PATENTANMELDUNG

(21) Anmeldenummer: 85105899.0

(22) Anmeldetag: 14.05.85

(51) Int. Cl.⁴: **B 64 D 17/32**, A 44 B 11/25

(30) Priorität: 17.05.84 DE 3418265
23.02.85 DE 3506454

(43) Veröffentlichungstag der Anmeldung: 21.11.85
Patentblatt 85/47

(84) Benannte Vertragsstaaten: FR GB IT

(71) Anmelder: AUTOFLUG GMBH,
Industriestrasse 10 Postfach 1180, D-2084 Rellingen (DE)

(72) Erfinder: Stemmildt, Hans-Joachim, Dipl.-Ing.,
Kroonhorst 51, D-2000 Hamburg 53 (DE)
Erfinder: Nöhren, Hubert, Dipl.-Ing., Astweg 51,
D-2000 Hamburg 54 (DE)

(74) Vertreter: Kühnemann, Klaus et al, Patentanwälte
Dipl.-Ing. Klaus Kühnemann Dr.-Ing. Karl-Ernst Müller
Sonderburgstrasse 36, D-4000 Düsseldorf 11 (DE)

(54) **Zentralverschluss für Anschnallgurte.**

(57) Bei einem Zentralverschluß für Anschnallgurte, insbesondere in Fluggeräten und Sportkraftwagen, mit einem Randwulst zum Hinterhaken der Anschlußstücke, die sich dadurch frei in die jeweilige Gurtzugrichtung einstellen können, und mit Steuerelementen zum Anlegen, zum gesicherten Festhalten sowie zum Freigeben der Anschlußstücke, wobei diese Steuerelemente mit einer manuell zu bedienenden Drehbetätigungsvorrichtung wirkungsmäßig gekoppelt sind, die oberhalb eines die Bewegungsvorgänge im Verschluß vermittelnden Zapfens angeordnet ist, besteht das Problem einer zweckmäßigen Anordnung der notwendigerweise vielfachen Bauteile bei gleichzeitiger Vermeidung einer zu großen Bauhöhe. Hiervon ausgehend soll die Aufgabe gelöst werden, die Bauhöhe herabzusetzen und nach Möglichkeit weniger Bauteile vorzusehen. Dazu sind die Steuerelemente (19, 24, 25, 38) für die Einnahme der wesentlichen Funktionsstellungen des Verschlusses im Bereich des von dem durch die Ober- und Unterseite des mittigen Zapfens (26) verlaufenden radialen Ebenenpaares und von dem in Richtung der Längsmittenachse (A) des Verschlusses verlaufenden Teil des Rückhalte- und Freigabeelementes (32) begrenzten Ringraumes um die Längsmittenachse (A) herum angeordnet.

11 32 31 30 19 42 39 40 38 10 28 31 11

49

48

A

16 17 15 14 13 18 33 41 37 34 32 14 16

Patentanwälte
**Dipl.-Ing. Klaus Kühnemann**
**Dr.-Ing. Karl-Ernst Müller**
Sonderburgstraße 36
4000 Düsseldorf 11
Telefon (02 11) 57 55 55
Postgirokonto: Köln 794 14-501

**0 161 664**

Autoflug GmbH
Industriestraße 10
2084 Rellingen 2

Zentralverschluß für Anschnallgurte

Die Erfindung betrifft einen Zentralverschluß für
Anschnallgurte, insbesondere in Fluggeräten und
Sportkraftwagen, zum schnell und gleichzeitig lösbaren
Verbinden mehrerer mit Anschlußstücken versehener,
an einem zentralen Punkt zusammenlaufender Gurte,
mit einem Randwulst zum Hinterhaken der Anschlußstücke, die sich dadurch frei in die jeweilige
Gurtzugrichtung einstellen können, und mit Steuerelementen zum Anlegen, zum gesicherten Festhalten
sowie zum Freigeben der Anschlußstücke, wobei diese
Steuerelemente mit einer manuell zu bedienenden
Drehbetätigungsvorrichtung, vorzugsweise einer
Drehscheibe, wirkungsmäßig gekoppelt sind, die
oberhalb eines mittigen Zapfens angeordnet ist, an
dem die Bewegungsvorgänge im Verschluß orientiert sind.

Zentralverschlüsse mit ähnlichen Merkmalen sind
durch die DE-AS 12 75 875 und DE-OS 30 47 664 bekannt;
sie gehören dem Typ der sog. Glockenschlösser an,
von denen abweichende Ausführungsformen auch aus
den GB-PS 758 185 und BE-PS 498 365 zu entnehmen
sind. Wesentlich ist dabei, daß die Gurtanschlußstücke nicht nur an einer ganz bestimmten Stelle
des Verschlusses angreifen können, wie dies beispielsweise bei einem Verschluß gemäß der
DE-AS 10 02 632 der Fall ist, sondern sich innerhalb
eines gewissen Bereiches am Verschluß, ausgehend
von dessen Mittelpunkt, in die tatsächliche Zugrichtung des betreffenden Gurtbandes selbsttätig
einstellen können, so daß ein verbesserter Sitz
des ganzen Gurtzeuges unter Berücksichtigung der
besonderen Körpermaße der betreffenden Person erreicht wird.

Die neueren bekannten Zentralverschlüsse weisen
zur Erfüllung ihrer Zweckbestimmung und in Verbindung damit zu ihrer richtigen Handhabung drei
Schaltstellungen ihrer Betätigungsvorrichtungen
auf, nämlich die Schaltstellungen "ANLEGEN", "GESICHERT"
und "ABLEGEN". Die am weitesten verbreitete Art
und Weise der Betätigung ist die Handhabung der
Funktionen mittels Drehen an einer Drehscheibe
und Ausübung eines Druckes am Verschluß in Körperrichtung der Person. Einen derartigen Verschluß
zeigt die erwähnte DE-AS 10 02 632, wobei es sich
allerdings um eine Bauweise mit vier federbelasteten,
durch ein Führungskreuz gehaltenen Ankerbolzen
und Sicherungsscheibe handelt. Auch dieser Verschluß
verfügt jedoch über einen Hauptzapfen, der senkrecht
zu einer Grundplatte verschieblich ist und das
Führungskreuz sowie die Sicherungsscheibe beaufschlagt.

- 3 -

An der Oberseite des Hauptzapfens ist eine kreisrunde
Drehscheibe befestigt, mit der die verschiedenen
Schloßfunktionen gehandhabt werden. Auch für Zentralverschlüsse des Glockentyps, also mit umlaufendem
Randwulst zum stellungsbeliebigen Einpicken von
hakenförmigen Anschlußstücken und einem hierzu
taumelnd gelagerten Verschlußteil, ist schon eine
Drehbetätigung mittels einer Drehscheibe oder eines
Drehkreuzes vorgeschlagen worden. Ebenfalls ein
älterer Vorschlag hat einen Zentralverschluß mit
einschlägigen Gattungsmerkmalen zum Gegenstand,
bei dem die Drehbetätigungsvorrichtung mit einer
durch Fingerdruck zu bedienenden linear verschieblichen Vorrichtung, vorzugsweise einer Taste, ausgerüstet ist, die mittels wenigstens eines Übertragungsgliedes zum zeitweiligen Lösen einer Verriegelung
der das Festhalten der Anschlußstücke bewirkenden
Bauteile vorgesehen ist. Dabei ist die Fingerdrucktaste entgegen ihrer vorgesehenen Druckrichtung
federbelastet und bewegt bei Rückkehr in ihre Ausgangsstellung die Verriegelung wieder in deren
Sperrstellung.

Die bekannten bzw. schon vorgeschlagenen Zentralverschlüsse sind aufgrund ihrer Bauform verhältnismäßig
dick, d. h. sie haben eine vergleichsweise große
Bauhöhe, wodurch die Verschlüsse am Körper der
Person entsprechend auftragen und hierdurch nicht
nur hinderlich sein können, sondern auch leichter
mit benachbarten Gegenständen kollidieren können,
so daß Fehlbetätigungen oder Verletzungen nicht
ausgeschlossen erscheinen. Außerdem haben einige
bekannte Verschlüsse den Nachteil einer Vielzahl
von Bestandteilen, was nicht nur den Montageaufwand
erhöht, sondern auch die Funktionsfähigkeit beeinträchtigen kann.

Der Erfindung liegt die Aufgabe zugrunde, einen
Zentralverschluß für Anschnallgurte mit den eingangs
genannten Gattungsmerkmalen zu schaffen, dessen
Bauhöhe einerseits und dessen Anzahl der Bauteile
andererseits so niedrig wie möglich sind, ohne
daß dadurch die Sicherheit des Verschlusses als
solche und seine Handhabbarkeit beeinträchtigt
werden.

Die erfindungsgemäße Lösung dieser Aufgabenstellung
ergibt sich einschließlich vorteilhafter Ausgestaltungen und Weiterbildungen derselben aus dem
Inhalt der Patentansprüche, welche dieser Beschreibung
vorangestellt sind.

Mit der Erfindung ist der Vorteil verbunden, daß
außer einer flachen Bauform und wenigen Einzelteilen
für die Hauptfunktionen des Verschlusses entsprechender
Raum für zusätzliche Bauteile zur Erzielung weiterer
Funktionen und erhöhten Bedienungskomforts, insbesondere beim Anlegen der Gurte, vorhanden ist.
Es kommt hinzu, daß eine Verschiebung des mittigen
Zapfens bzw. Hauptzapfens in Richtung auf den Körper
der Person vermieden werden kann, nachdem eine
derartige Kraftausübung mit der Hand dem natürlichen
Verhalten wenig entspricht. Zum Lösen der Gurtanschlußstücke wird vielmehr eine drehende Bewegung bevorzugt,
die eine axiale Bewegung des Hauptzapfens in Richtung
vom Körper weg zur Folge hat, so daß dieser unbelastet
bleibt.

Zum Anlegen des Gurtzeuges, d. h. zum Einstecken
der Gurtanschlußstücke oder Gurtlaschen in den
Zentralverschluß, kann im Zusammenhang mit der
erfindungsgemäßen Ausbildung sowohl eine prinzipiell
bereits vorgeschlagene Drucktaste als auch die
bekannte Methode des Verdrehens der Betätigungsvorrichtung verwendet werden.

Mit den Schlössern gemäß dem Stand der Technik
ist der Nachteil verbunden, daß eine gesonderte
und gezielte Auslösung einzelner Gurtanschlußstücke
nicht möglich ist, weil bei Einstellen der Schloßfunktion "ABLEGEN" bei den bekannten Schlössern
immer jeweils alle Gurtanschlußstücke vom Schloß freigegeben werden bzw. eine Zwei-Hand-Bedienung,
nämlich das Lösen der Verriegelung und das Herausnehmen
der jeweiligen Gurtanschlußstücke, erforderlich
ist.

Es ist daher eine weitere Aufgabe der Erfindung,
die mit der Erfindung schon umgestalteten Schlösser
weiter derart zu verbessern, daß eine gezielte
Auslösung einzelner Gurtanschlußstücke, vorzugsweise der beiden Schultergurtlaschen, mit Einhandbedienung zügig möglich ist, ohne die Schloßverbindung mit den anderen Laschen aufzuheben.

Die Lösung dieser Aufgabe macht sich die Weiterbildung der bekannten Schlösser mit den Merkmalen
der Ansprüche 1 - 15 zunutze, indem an der Drehscheibe über den für die Einzelauslösung vorgesehenen
Anschlußstücken eine Griffmulde ausgebildet ist.
Nach Drücken der die Schloßverriegelung aufhebenden
Drucktaste gestattet die Griffmulde ein gezieltes
Kippen des Auswerferringes mit Freigabe der betreffenden
Anschlußstücke. Somit ist mit der Erfindung der
besondere Vorteil verbunden, daß hier eine Einhandbedienung der Schlösser möglich ist.

In der Zeichnung ist ein Ausführungsbeispiel der
Erfindung wiedergegeben, welches nachstehend beschrieben
wird. Es zeigen:

Fig. 1    eine Ansicht auf einen diametralen, in
          Richtung der Längsmittenachse geführten
          Querschnitt durch einen Zentralverschluß,

Fig. 2    eine Ansicht auf einen Querschnitt entsprechend

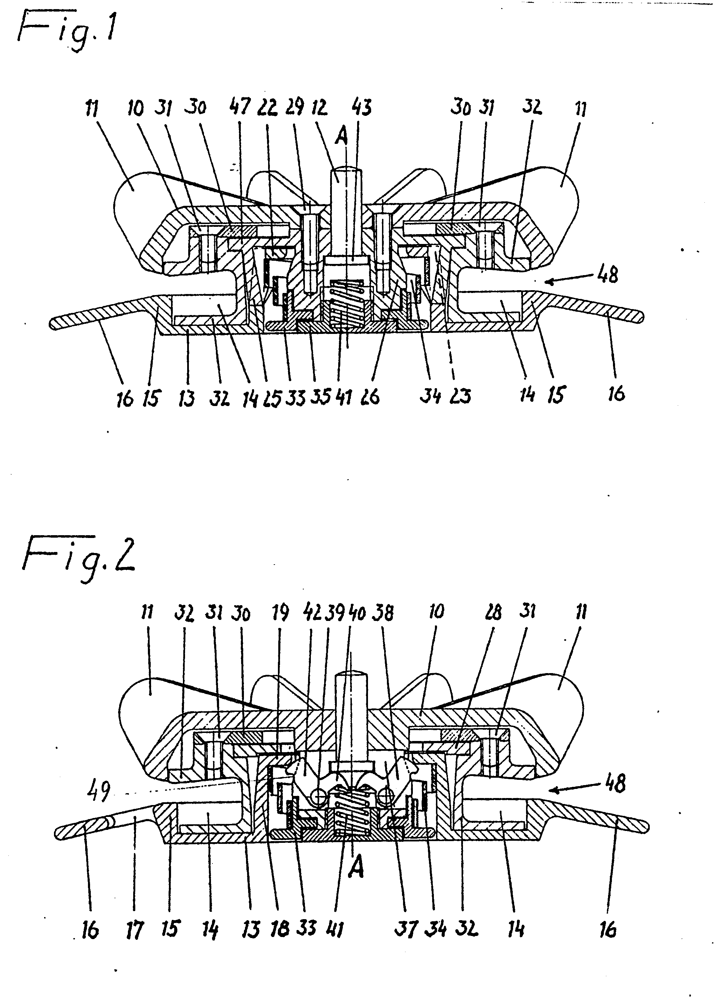

          Fig. 1, der im rechten Winkel dazu geführt
          ist,

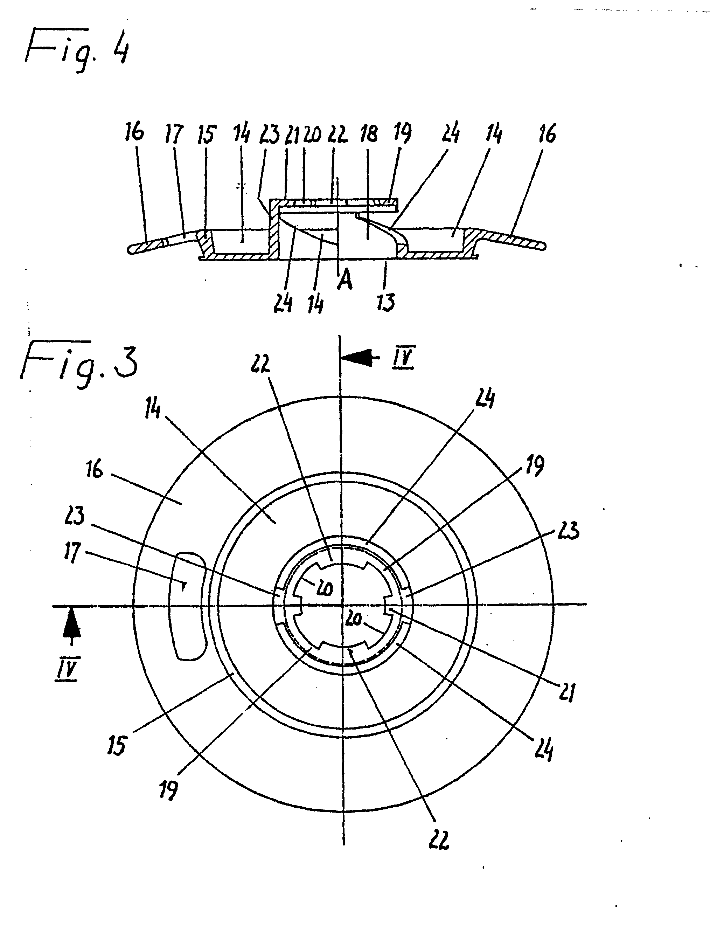

Fig. 3    eine Draufsicht auf den Laschenhaltering,

Fig. 4    eine Ansicht auf einen im rechten Winkel
          geführten radialen Querschnitt nach der
          Linie IV - IV in Fig. 3,

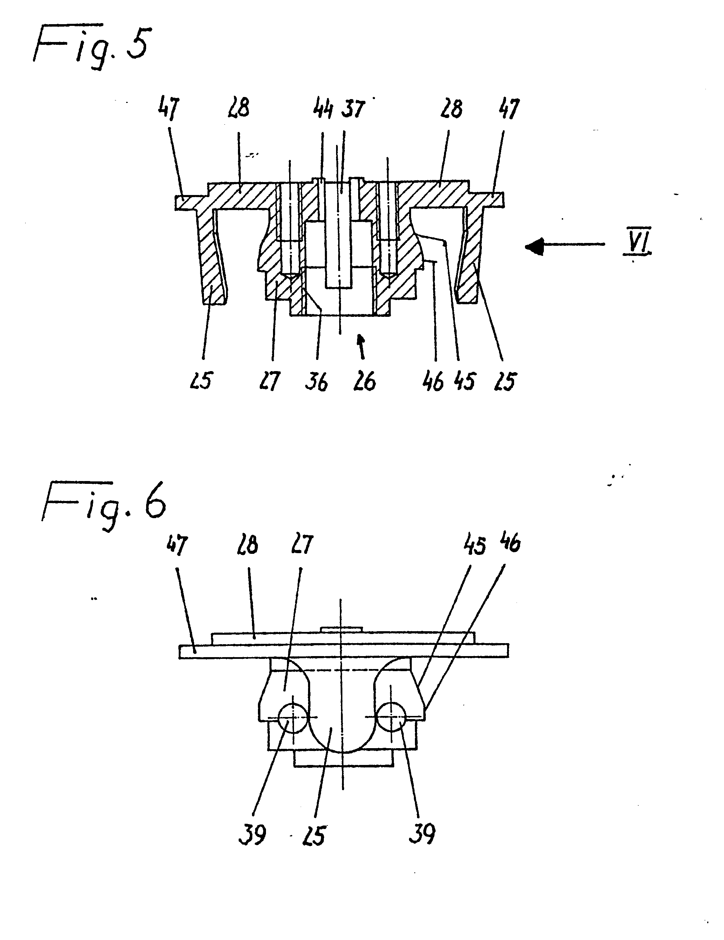

Fig. 5    eine Ansicht auf einen diametralen, in
          Richtung der Längsmittenachse des Verschlusses
          geführten Querschnitt durch den mit den
          Nocken kombinierten Hauptzapfen,

Fig. 6    eine Seitenansicht auf den Gegenstand
          von Fig. 5 in Richtung des Pfeiles VI.

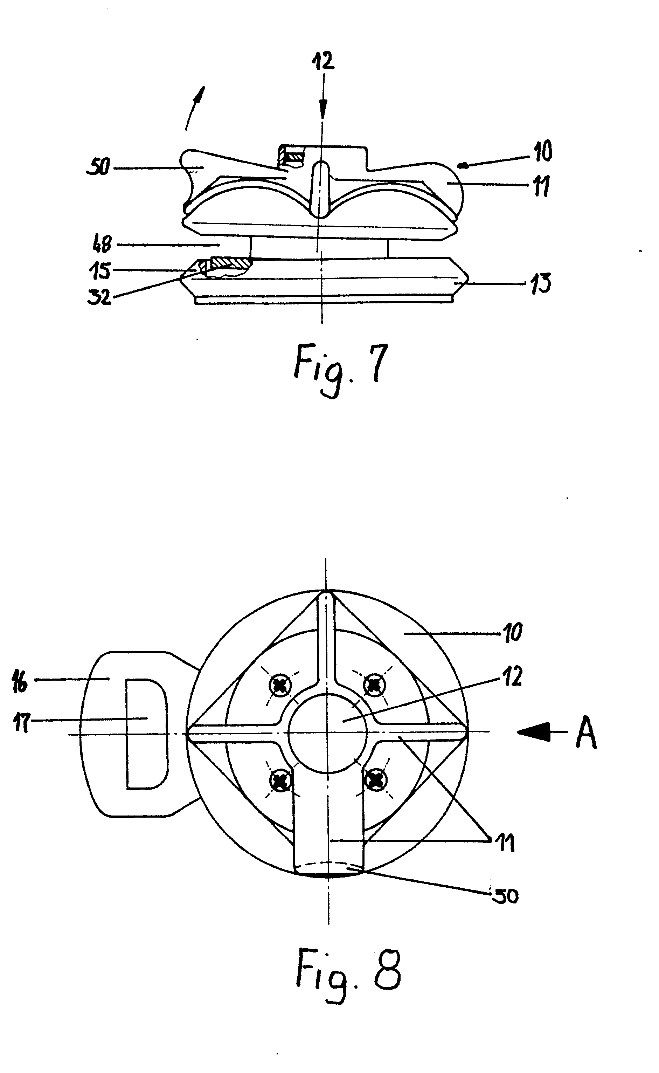

Fig. 7    eine Draufsicht auf ein sogenanntes Glockenschloß in einer anderen Ausführungsform,

Fig. 8    das Glockenschloß in Seitenansicht A gemäß
          Fig. 7.

Der Zentralverschluß hat ungefähr die Form einer
flachen, kreisrunden Dose mit einem oberen Abdeckteil, welches als Drehscheibe 10 mit radialen Flügeln
11 zum Anfassen und zur Betätigung mit einer Hand
ausgebildet ist. In der Mitte der Drehscheibe 10 ist ein Druckstift 12 als Taste zum Eindrücken
mit einem Finger angeordnet. Die Bauteile 10, 11,
12 sind die Bedienungselemente des Zentralverschlusses.
Aufgrund entsprechender Betätigung dieser Elemente
durch die Person, welche das Gurtzeug mit dem Verschluß trägt, nimmt dieser die Funktionsstellungen
"ANLEGEN", "GESICHERT" und "ABLEGEN" ein.

Das Unterteil des ungefähr dosenförmigen Verschlusses
wird durch einen Laschenhaltering 13 gebildet,
der eine abgewandelte Glockenform aufweist, weshalb
der Verschluß der Gattung "Glockenschloß" angehört.
Der Laschenhaltering 13 ergibt sich im einzelnen
aus den Figuren 3 und 4. Er ist so gestaltet, daß
er vor allem eine ringförmige, oben offene Rinne
14 ausbildet, deren verstärkte Außenwandung 15 (Randwulst)
das Widerlager für die in der Zeichnung nicht dargestellten
Gurtanschlußstücke oder Laschen bildet, die mit
ihren im Querschnitt hakenförmigen Enden von oben
her in die Rinne 14 eingreifen und sich unter Zug
gegen den Randwulst 15 legen. In radialer Richtung
nach außen schließt sich an die Wandung 15 nach
oben ein Tellerring 16 an, der u. a. als Rampe
zum erleichterten Ansetzen und Einstecken der Laschen
dient. Der Tellerring 16 hat eine Öffnung 17 zum
unverlierbaren Anbringen des Verschlusses an einem
nicht lösbaren Gurtstück (nicht dargestellt).

Die Innenwand der Rinne 14 des Laschenhalteringes
13 bildet eine Hülse 18 mit oben nach innen vorragendem
Rand 19. Dessen Innenkante springt, wie sich aus
Figur 3 ergibt, mehrfach vor und zurück, so daß
sich vier Einbuchtungen 20 und zwei mal zwei Vorsprünge
von paarweise verschiedener Breite ergeben, nämlich zwei schmalere Vorsprünge 21 und zwei breitere
Vorsprünge 22. Die Wand der Hülse 18 erreicht den
Rand 19 nur an zwei diametral einander gegenüberliegenden Stellen 23 (Fig. 3); in den übrigen Bereichen des Kreisumfanges der Hülse 18 bildet der
Rand 19 eine Art freischwebenden Ring (vgl. Fig. 4
rechte Hälfte). Unter diesen Bereichen verläuft
die Wand der Hülse 18 mit zwei oberen Kanten jeweils
als Kurve 24, wobei diese Kurven als Steuerelemente
für die Erzielung von wesentlichen Funktionsstellungen
des Verschlusses dienen.

Die den Kurven 24 zugeordneten, auf diesen abgleitenden
Steuerelemente werden durch Nocken 25 gebildet,
welche sich an einem kombinierten Bauteil befinden,
das in den Figuren 5 und 6 dargestellt ist. Das
kombinierte Bauteil wird nachfolgend mit Hauptzapfen
26 bezeichnet. Hierbei handelt es sich um eine
mehrfach gestufte Buchse 27, die oben einstückig,
insbesondere als Gußteil, in einen scheibenförmigen
Flansch 28 übergeht, an dessen Unterfläche, mit
Abstand von der Buchse 27, die beiden Nocken 25
diametral einander gegenüberliegend angeformt sind.
Die Nocken 25 befinden sich somit in dem Bereich
zwischen der Ober- und Unterseite des Hauptzapfens
26.

Wie sich aus Figur 1 in Verbindung mit Figur 5
ergibt, ist der Hauptzapfen 26 mittels zweier Schrauben
29 fest mit der Drehscheibe 10 verbunden. Dabei
befindet sich zwischen Drehscheibe 10 und Flansch
28 noch ein Lagerring 30, der mittels Schrauben
31 an der Oberseite eines Rückhalte- und Freigabeelementes für die in den Verschluß einzusteckenden und dann wieder zu lösenden Gurtlaschen (nicht
dargestellt) befestigt ist. Dieses Rückhalte- und
Freigabeelement, hier als Auswerferring 32 bezeichnet,
hat ein nach außen offenes U-Profil, dessen lichte
Weite im wesentlichen der Höhe der hakenförmigen
Laschenenden entspricht, so daß die Laschenenden
in dem U-Profil Aufnahme finden können. Aufgrund
der Schrauben 29, 31 sind die Drehscheibe 10, der
Hauptzapfen 26, der Lagerring 30 und der Auswerferring 32 miteinander verbunden, so daß sie nur
gemeinsam in Richtung der Längsmittenachse A des
Verschlusses beweglich sind. In Umfangsrichtung
des angenähert dosenförmigen Verschlusses können
sich Drehscheibe 10 und Hauptzapfen 26 einerseits
unabhängig von Lagerring 30 und Auswerferring 32
andererseits bewegen, d. h. die erstgenannte Baugruppe
kann gegenüber der zweitgenannten um die Längsmittenachse A verdreht werden.

Das Unterende der Buchse 27 hat eine doppelte Abstufung
zur Aufnahme eines entsprechend gestalteten Federlagers 33 für eine bandförmige Schraubendruckfeder
34, deren Windungen in dem ringförmigen Zwischenraum zwischen Buchse 27 und Hülse 18 verlaufen
(Fig. 2). Die Feder 34 stützt sich gemäß den Figuren
1 und 2 unten auf einem entsprechenden Ringflansch
des Federlagers 33 und oben gegen den Rand 19 der
Hülse 18 ab. Zur Befestigung des Federlagers 33
an der Buchse 27 des Hauptzapfens 26 dient eine
Federlagerschraube 35, die von unten her in eine
Gewindebohrung 36 (Fig. 5) der Buchse 27 eingeschraubt
ist. Da der Flansch 28 des Hauptzapfens 26 über
dem Rand 19 lagert und die Federlagerschraube 35
mittels Federlager 33 und Feder 34 von unten her gegen den Rand 19 anliegt, wird der Zusammenhalt
der Teile des Verschlusses auf diese Weise gewährleistet. Dabei sind die Größenverhältnisse des
Innenraumes der Hülse 18 und der Buchse 27 mit
Federlager 33 und Federlagerschraube 35 so gewählt,
daß sich bei der in den Figuren 1 und 2 dargestellten
Funktionsstellung des Verschlusses eine im wesentlichen ebene Unterfläche ergibt und die untere
Öffnung der Hülse 18 verschlossen ist.

Wie sich durch Betrachtung der Figuren 2 und 5
ergibt, hat die Buchse 27 des Hauptzapfens 26 einen
diametral verlaufenden Schlitz 37, in dem symmetrisch
zur Längsmittenachse A zwei winkelförmige Schwenkriegel 38 auf zugeordneten Stiften 39 gelagert
sind. Der nach innen zeigende Schenkel 40 jedes
Schwenkriegels 38 hat einen nach unten gerichteten
hakenförmigen Vorsprung, mit dem er die oberste
Windung einer Schraubendruckfeder 41 übergreift,
die in einer Mittenbohrung der Federlagerschraube
35 einsitzt und in Richtung der Längsmittenachse
A wirkt. Hierdurch ist die Feder 41 bestrebt, die
Innenschenkel 40 der Schwenkriegel 38 nach oben
zu drücken, so daß die Schwenkriegel mit ihrem
jeweils anderen Schenkel 42 nach außen zu schwenken
veranlaßt werden. Gleichzeitig drückt die Feder
41 den Druckstift 12 mittelbar, nämlich über die
Schenkel 40 der Schwenkriegel 38, nach oben in
dessen Ausgangs- oder Ruheposition (Fig. 1 und 2).
Als Anlage für die Schenkel 40 ist der Druckstift
12 unten mit einem Überstand 43 versehen. Zur längsbeweglichen Lagerung und Führung des Druckstiftes
12 im Hauptzapfen 26 hat dieser im Bereich des
Flansches 28 eine Bohrung 44, die von dem Schlitz 37 durchquert wird (Fig. 5).

Die äußeren Schenkel 42 der Schwenkriegel 38 sind
so lang, daß sie - wie sich aus Figur 2 ergibt -
bei entspannter Stellung der Feder 41 und nach
außen geschwenkter Lage der Riegel 38 von unten
her mit Spiel an entsprechend abgerundeten Innenkanten
des Randes 19 der Hülse 18 anliegen und dadurch bewirken,
daß sich der Hauptzapfen 26 mit Buchse 27 und Flansch 28
gegenüber dem Laschenhaltering 13 mit Hülse 18 praktisch
nicht in Richtung der Längsmittenachse nach oben
verschieben kann. Da der Auswerferring 32 in der
bereits beschriebenen Weise mit dem Hauptzapfen
26 in Verbindung steht, bedeutet dies, daß sich
auch der Auswerferring 32 nicht bewegen kann, wenn
die Schwenkriegel 38 gemäß Figur 2 nach außen geschwenkt sind und sich am Rand 19 abstützen. Dieser
Zustand stellt die Position "GESICHERT" dar.

Im Bereich des Randes 19 hat die Buchse 27 des
Hauptzapfens 26 einen Außendurchmesser, der um
einen gewissen Betrag kleiner ist als der Innendurchmesser des Randes 19. Von dort aus verläuft
die Querschnittskontur (Fig. 5) der Buchse 27 über
eine Schräge 45 nach außen bis zur Erreichung des
größten Außendurchmessers der Buchse 27, wo diese
über ein kurzes Stück 46 zylindrisch gestaltet
ist. Anschließend folgt die bereits erwähnte doppelte
Abstufung zur Aufnahme des Federlagers 33. Der
zylindrische Teil 46 entspricht mit seinem Außendurchmesser dem Innendurchmesser des Randes 19, so daß
bei Eintritt des diesbezüglichen Abschnitts der
Buchse 27 in den Lichtraum des Randes 19 für eine
Geradführung des Hauptzapfens 26 gegenüber dem

- 12 -

0 161 664

Laschenhaltering 13 mit Hülse 18 gesorgt ist, während
sich der Hauptzapfen 26 gegenüber dem Laschenhaltering 13 schräg einstellen kann, so lange sich noch
die Schräge 45 der Buchse 27 im Bereich des Randes
19 befindet (Taumelfähigkeit des Hauptzapfens 26).

Beim Gebrauch wirken die beschriebenen Bauteile
des Zentralverschlusses wie folgt zusammen: Der
Verschluß hängt mittels der Öffnung 17 im Tellerring 16 unverlierbar an einem Gurtband im Bereich
der Körpermitte der anzuschnallenden Person. Dabei
dient der Tellerring 16 auch zur Stabilisierung
der Lage des Verschlusses, indem seine Kippfähigkeit auf dem Körper bzw. auf der Kleidung aufgrund
der breiten Auflage weitgehend ausgeschlossen wird.
Der Verschluß befindet sich in der Schaltstellung
"GESICHERT" gemäß den Figuren 1 und 2, in der die
Bauteile fest verriegelt sind. Der Auswerferring
32 ruht in der Rinne 14 des Laschenhalteringes
13 und kann sich daraus nicht nach oben hin entfernen, weil die nach außen gerichteten Schenkel
42 der Schwenkriegel 38 unter den Rand 19 stoßen,
so daß sich der Hauptzapfen 26 nicht nach oben
bewegen kann. Der Außenrand 47 des Flansches 28
hält den Auswerferring 32 von oben her fest. Damit
ist auch eine sog. Schocksicherung des Verschlusses
gewährleistet.

Zum Anlegen der Gurte ergreift die Person mit der
einen Hand die einzelnen Gurtanschlußstücke, auch
Laschen genannt, setzt sie mit ihren hakenförmigen
Vorderenden auf dem rampenartigen Tellerring 16
an und schiebt sie gegen den Spalt 48 zwischen
Randwulst bzw. Außenwandung 15 und Außenkante der Drehscheibe 10. Gleichzeitig drückt die Person
mit einem Finger der anderen Hand auf den Druckstift
12, der sich in den Verschluß hinein bewegt. Dabei
werden mittels des Überstandes 43 die nach innen
gerichteten Schenkel 40 der Schwenkriegel 38 gegen
den Druck der Feder 41 nach unten gedrückt, die
Riegel 38 schwenken um ihre Lagerstifte 39 einwärts,
die äußeren Schenkel 42 verlassen den Rand 19 nach
innen hin, und dadurch wird die Sicherung des Verschlusses aufgehoben. Beim Ausüben einer nach oben
gerichteten Kraft an einer Stelle des Außenrandes
der Drehscheibe 10 mittels einer in den Spalt 48
hineingedrückten Lasche eines Gurtbandes kann
sich der Auswerferring 32 in der Rinne 14 örtlich
anheben, indem sich der Hauptzapfen 26 mit den
an ihm befestigten Teilen gegenüber der Längsmittenachse A schräg einstellt, was auch dadurch ermöglicht
wird, daß die Buchse 27 wegen ihrer Schräge 45
im Lichtraum des Randes 19 genügend Spiel hat.
Dabei muß die Rückstellkraft der Feder 34 überwunden
werden, d. h. wenn die betreffende Lasche ganz
in den Spalt 48 und damit in den vom U-Profil des
Auswerferringes 32 umschlossenen Raum eingetreten
ist, schnappt dieser einschließlich der damit
verbundenen Teile wieder in die Stellung gemäß
den Figuren 1 und 2 zurück, und die Lasche verhakt
sich hinter dem Randwulst 15. Werden auf diese
Weise nacheinander die einzelnen Laschen rundherum
in den Verschluß eingesteckt, führt der Hauptzapfen
26 mit Flansch 28, Lagerring 30, Auswerferring
32 und Drehscheibe 10 eine taumelnde Bewegung aus.
Sind alle Gurte auf diese Weise mit dem Zentralverschluß
verbunden, gibt die Person den Druckstift 12 wieder
frei, die Feder 41 kann sich entspannen und die Schwenkriegel 38 nach außen bewegen, so daß deren
äußere Schenkel 42 unter den Rand 19 treten (Fig.
2); der Verschluß ist wieder verriegelt und gesichert.

Zur Erzielung der Schaltstellung "ABLEGEN", wobei
sämtliche Laschen den Verschluß gemeinsam verlassen
sollen, so daß das Gurtzeug die Person schlagartig
freigibt, muß die Drehscheibe 10 mit der Hand um
die Längsmittenachse A verdreht werden, und zwar
beliebig rechts- oder linksherum. Hierdurch wird
dann zunächst die Verriegelung seitens der Schwenkriegel 38 aufgehoben und der Auswerferring 32 in
der Rinne 14 parallel zur Grundfläche des Laschenhalteringes 13 angehoben, so daß sämtliche Laschen
gleichzeitig die Oberkante des Randwulstes 15 überschreiten und den Verschluß nach außen hin verlassen
können. Im einzelnen geschieht hierbei folgendes:
Die Drehscheibe 10 wird beispielsweise im Uhrzeigersinn verdreht, wobei der damit fest verbundene
Hauptzapfen 26 mitgenommen wird, während der Lagerring
30 mit dem damit verschraubten Auswerferring 32
nicht verdreht wird. Der Druckstift 12 und die
Schwenkriegel 38 bleiben als solche unberührt,
drehen sich aber zusammen mit dem Hauptzapfen 26
und seinen Bestandteilen mit. Hierdurch verlassen
die Oberkanten der äußeren Riegelschenkel 42 den
Rand 19 (vgl. Fig. 3), indem sie am jeweiligen
Ende der Vorsprünge 21 des Randes 19 in die zunächst
liegende Einbuchtung 20 eintreten und nun nicht
mehr durch den Rand 19 überdeckt werden. Die Verriegelung
des Verschlusses ist nun aufgehoben. Die Nocken
25 laufen dabei auf den zugeordneten Kurven 24
schräg nach oben und bei weiterem Verdrehen der
Drehscheibe 10 wird der Hauptzapfen 26 mit den Teilen 28, 30, 32, 10 gegenüber der Hülse 18 in
Richtung der Achse A angehoben. Dabei bewegt sich
auch die Federlagerschraube 35 mit dem Federlager
33 in dem von der Hülse 18 umschlossenen Schacht
nach innen bzw. nach oben, und zwar gegen den Druck
der Feder 34, die sich von unten her gegen den
Rand 19 abstützt. Die Hubbewegung geschieht so lange,
bis die Feder 34 zu Block gegangen ist. Gleichzeitig hat
der Auswerferring 32 seine höchste Stellung in der Rinne
14 des Laschenhalteringes 13 erreicht, was der größten
Öffnung des Spaltes 48 entspricht, und die Gurtlaschen
können frei ausrauschen. Wenn die Person daraufhin
die Drehscheibe 10 losläßt, schnellt diese unter
der Wirkung der Feder 34 wieder in ihre Ausgangslage
zurück, wobei sie sich in Gegenrichtung verdreht.
Der Verschluß nimmt dann wieder die in Figur 2
dargestellte Position ein.

Unabhängig von dem Druckstift 12 kann auch mittels
der Drehscheibe 10 eine Schaltstellung "ANLEGEN"
erreicht werden, indem die Drehscheibe entsprechend
weit in der einen oder anderen Richtung gedreht
wird.

Hierzu braucht der Drehwinkel nur so groß zu sein,
daß die Schenkel 42 der Schwenkriegel 38 die zugeordneten Randvorsprünge 21 verlassen, wodurch der
Hauptzapfen 26 und der damit in Verbindung stehende
Auswerferring 32 taumelfähig werden. Diese Umstände
eröffnen im übrigen auch die Möglichkeit, auf die
Schwenkriegel 38, den Druckstift und die Feder
41 zu verzichten, wodurch sich eine Ausführungsform
ergibt, die entsprechend einfacher aufgebaut ist
und sich mit geringerem Aufwand herstellen läßt.

An die Stelle der Schwenkriegel 38 treten dann
in der Zeichnung nicht dargestellte Vorsprünge
oder Riegelnasen, die diametral einander gegenüberliegend außen an der Buchse 27 desHauptzapfens
26 angeformt sind, und zwar praktisch genau an
der Stelle, wo in Figur 2 die äußeren Enden der
Schenkel 42 der Schwenkriegel 38 über die jeweilige
Kontur der Schräge 45 (gestrichelte Linie) hinaustreten (in diesem Falle entfällt auch der Schlitz 37).
Die vorgenannten Riegelnasen wirken dann bei den
drei wesentlichen Funktionsstellungen des Verschlusses
wie die Schwenkriegel 38, bedingen jedoch den Nachteil, daß der mit dem Druckstift 12 verbundene
Anlegekomfort nicht zur Verfügung steht.

Im Zusammenhang mit der Funktion des Verschlusses
ist es von Bedeutung, daß die Kurven 24 (Fig. 4)
angenähert V-förmig sind, d. h. in der Mitte unten
eine flache Spitze ausbilden. Hierdurch wird gewährleistet, daß der Verschluß nach dem Ablegen der
Gurte selbsttätig in seine Schaltstellung "GESICHERT"
zurückspringt, wozu die Schraubendruckfeder 34
die benötigte Kraft beistellt. Dabei gleiten die
Nocken 25 auf den Kurven 24 ab und verdrehen zugleich
den Hauptzapfen 26 mit der Drehscheibe 10 gegenüber
dem Laschenhaltering 13, bis die Nocken 25 im Tiefsten
der Kurven 24 angelangt sind, wo sie stehenbleiben.
Dies kann, wie erwähnt, in beiden Drehrichtungen
vonstatten gehen. Da sich die Kurven 24 im Anschluß
an ihr Tiefstes sogleich ansteigend erheben, muß
zwischen den Außenkanten der Schenkel 42 der Schwenkriegel 38 bzw. den Außenkanten der erwähnten Riegelnasen (nicht dargestellt) einerseits und den Innenkanten des Randes 19 andererseits ein geringes Spiel vorgesehen sein, welches den Anstieg der
Kurven 24 während des Weges berücksichtigt, den
die Schwenkriegel 38 bzw. die Riegelnasen unter
dem Rand 19 zurücklegen müssen, ehe sie in die
benachbarte Einbuchtung 20 eintreten, wo sie ungehindert aufsteigen können.

Im ganzen beträgt der Verdrehwinkel zwischen der
Schaltstellung "GESICHERT" und der Schaltstellung
"ABLEGEN" rd. 60 Grad, und dann ist der größte
Hub des Hauptzapfens 26 und damit auch des Auswerferringes 32 erreicht. Da im letzten Teil der Hubbewegung Wert darauf gelegt werden muß, den Hauptzapfen
26 und die mit ihm verbundenen Bauteile sorgfältig
zu zentrieren, bildet der Rand 19 in möglichst
großen Bereichen eine Führung für den zylindrischen
Teil 46 der Buchse 27, und aus diesem Grunde ist
der Vorsprung 22 breiter als der Vorsprung 21 am
Rand 19. Während die Schwenkriegelschenkel 42 möglichst bald vom Rand 19 freikommen sollen, wozu
der Vorsprung 21 entsprechend schmal ist, können
die Schwenkriegel 38 den Vorsprung 22 mittels kleiner
Einbuchtungen 49 übergreifen, nachdem sie in diesem
Winkelbereich schon über die Ebene des Randes 19
emporragen. Hierdurch kann der Vorsprung 22 breiter
ausgeführt werden, wodurch sich eine verbesserte
Führung des sich anhebenden Hauptzapfens 26 ergibt.
Die Anordnung der Einbuchtungen 49 gilt sinngemäß
in gleicher Weise für den Fall der Ausführung des
Verschlusses mit Riegelnasen am Hauptzapfen anstelle
der Schwenkriegel 38.

Bei der Ausführungsform mit Riegelnasen statt Schwenkriegeln, also ohne Druckstiftbetätigung beim Anlegen, empfiehlt es sich, die Kurven 24 mit einer Gestaltung
zu versehen, welche der Person anzeigt, wann der
Augenblick erreicht ist, in dem der Verschluß von
der ursprünglichen Schaltstellung "GESICHERT" in
die benötigte Schaltstellung "ANLEGEN" gelangt
ist. Hierzu kann in die jeweilige Kurve 24 beispielsweise eine Querrille oder ein kurzes Stück mit
erhöhter Steigung der Kurve dort eingearbeitet
werden, wo die Riegelnasen die schmalen Vorsprünge
21 des Randes 19 verlassen haben und in die jeweilige
Ausnehmung oder Einbuchtung 20 eingetreten sind.
Die Person verspürt dann in der den Verschluß bedienenden Hand einen kleinen Ruck oder eine gewisse
Erschwerung der Drehbewegung, womit ihr signalisiert
wird, daß die Position "ANLEGEN" nunmehr erreicht
ist. Da der Verschluß zwei ungefähr V-förmige Kurven
24 und somit vier ansteigende Kurvenabschnitte
aufweist, müssen entsprechend vier Querrillen oder
verstärkte Steigungsstücke vorgesehen sein.

Bei einem weiteren Ausführungsbeispiel entsprechend
den Figuren 7 und 8 ist bei einem Glockenschloß
eine gezielte Auslösung und Freigabe der Schultergurtlaschen (nicht dargestellt) vorgesehen. Hierzu
ist an der Drehscheibe 10 des Schlosses über den
für die gesonderte Auslösung vorgesehenen Schultergurtlaschen eine Griffmulde vorgesehen, wobei für
die Funktion des Schlosses im wesentlichen der
gleiche Ablauf gilt wie bei dem zuvor eingehend
erläuterten Schloß.

Die Betätigung der Fingertaste 12 hebt die Verriegelung
des Schlosses auf, so daß der Auswerferring 32
kippbar ist. Während beim Einschieben der Gurtan-

**0 161 664**

schlußstücke bei gedrückter Fingertaste 12 das
Kippen des Auswerferringes 32 durch den Druck der
entsprechend formmäßig gestalteten Gurtanschlußstücke
bewirkt wird, wird die entsprechende Kippbewegung
des Auswerferringes 32 bei der gezielten Auslösung
durch ein Anheben der zu diesem Zweck über den
auszulösenden Gurtanschlußstücken mittels der an
der Drehscheibe 10 ausgebildeten Griffmulde 50
erreicht.

Sobald also der Benutzer die Verriegelung des Schlosses
durch das Betätigen der Fingerdrucktaste 12 aufgehoben
hat, kann er mittels der über den für die Auslösung
vorgesehenen Anschlußstücken angeordneten Griffmulde
50 vorzugsweise mit dem Daumen die Drehscheibe
10 und damit den mit dieser festverbundenen
Auswerferring 32 kippen, so daß der Auswerferring
32 den oberen Glockenrand erreicht und mit diesem
in seiner Höhe übereinstimmt. Im Anschluß daran
können die in aller Regel unter dem leichten
Gurtzug einer Aufrollvorrichtung stehenden
Anschlußstücke aus dem Auswerferring 32 und damit
aus der Verriegelung des Schlosses herausgleiten,
während die weiteren Gurtanschlußstücke nach wie
vor durch den gekippten Auswerferring 32 festgehalten
werden.

Die in der vorstehenden Beschreibung, den Patentansprüchen, der Zusammenfassung und der Zeichnung
offenbarten Merkmale des Gegenstandes dieser Unterlagen können sowohl einzeln als auch in beliebigen
Kombinationen untereinander für die Verwirklichung
der Erfindung in ihren verschiedenen Ausführungsformen
wesentlich sein.

Patentansprüche

- 20 -

P a t e n t a n s p r ü c h e

1. Zentralverschluß für Anschnallgurte, insbesondere
   in Fluggeräten und Sportkraftwagen, zum schnell
   und gleichzeitig lösbaren Verbinden mehrerer
   mit Anschlußstücken versehener, an einem zentralen Punkt zusammenlaufender Gurte, mit einem
   Randwulst zum Hinterhaken der Anschlußstücke,
   die sich dadurch frei in die jeweilige Gurtzugrichtung einstellen können, und mit Steuerelementen
   zum Anlegen, zum gesicherten Festhalten sowie
   zum Freigeben der Anschlußstücke, wobei diese
   Steuerelemente mit einer manuell zu bedienenden
   Drehbetätigungsvorrichtung, vorzugsweise einer
   Drehscheibe, wirkungsmäßig gekoppelt sind, die
   oberhalb eines mittigen Zapfens angeordnet ist,
   an dem die Bewegungsvorgänge im Verschluß orientiert
   sind, dadurch gekennzeichnet, daß die Steuerelemente
   (19, 24, 25, 38) für die Einnahme der wesent-

0 161 664

lichen Funktionsstellungen des Verschlusses
im Bereich des von dem durch die Ober- und Unterseite des mittigen Zapfens (26) verlaufenden
radialen Ebenenpaares und von dem in Richtung
der Längsmittenachse (A) des Verschlusses verlaufenden Teil des Rückhalte- und Freigabeelementes
(32) begrenzten Ringraumes um die Längsmittenachse (A) herum angeordnet sind.

2. Zentralverschluß nach Anspruch 1, dadurch gekennzeichnet, daß die für die Einnahme der Funktionsstellung "ABLEGEN" vorgesehenen Steuerelemente
(24, 25) außerhalb des mittigen Zapfens (26)
und die für die Einnahme der Funktionsstellungen
"ANLEGEN" und "GESICHERT" vorgesehenen Steuerelemente (38) im wesentlichen innerhalb des von
dem mittigen Zapfen (26) umschriebenen Raumes
angeordnet sind.

3. Zentralverschluß nach Anspruch 1 und 2, dadurch
gekennzeichnet, daß der mittige Zapfen oder
Hauptzapfen (26) mit der Drehbetätigungsvorrichtung (10) fest verbunden ist.

4. Zentralverschluß nach Anspruch 1 - 3, dadurch
gekennzeichnet, daß das Rückhalte- und Freigabeelement
(32) formschlüssig, aber verdrehfähig mit dem
mittigen Zapfen bzw. Hauptzapfen (26) verbunden
ist.

5. Zentralverschluß nach Anspruch 1 - 3, dadurch
gekennzeichnet, daß der mittige Zapfen bzw.
Hauptzapfen (26) und das Rückhalte- und Freigabeelement (32) als ein integriertes Bauteil,
insbesondere einstückiges Bauteil, ausgebildet
sind.

0 161 664

6. Zentralverschluß nach wenigstens einem der
   vorangehenden Ansprüche, dadurch gekennzeichnet,
   daß der Randwulst als Bestandteil eines ringförmigen
   Bauteiles (Laschenhalterring 13) mit Aufnahmerinne (14) für die Gurtanschlußstücke und zur
   Mitte hin anschließender Hülse (18) zur Aufnahme des mittigen Zapfens (26) ausgebildet
   ist.

7. Zentralverschluß nach Anspruch 6, dadurch gekennzeichnet, daß an den die Rinne (14) umgebenden
   Randwulst (15) des Laschenhalteringes (13)
   ein Tellerring (16) als Rampe für die Gurtanschlußstücke angeformt ist.

8. Zentralverschluß nach Anspruch 6, dadurch gekennzeichnet, daß die Wandung der Hülse (18) teilweise in Form von Kurven (24) ausgebildet ist,
   die mit Nocken (25) korrespondieren, welche
   mit dem Hauptzapfen (26) verbunden sind.

9. Zentralverschluß nach Anspruch 8, dadurch gekennzeichnet, daß der mittige Zapfen (Hauptzapfen
   26) oben mit einem Flansch (28) versehen ist,
   der an diametral einander gegenüberliegenden
   Stellen seiner Unterfläche die sich nach unten
   erstreckenden Nocken (25) trägt.

10. Zentralverschluß nach Anspruch 9, dadurch gekennzeichnet, daß in einem axialen Querschlitz (37)
    des mittigen Zapfens (26) zwei winkelförmige
    Schwenkriegel (38) gelagert sind, deren jeweils
    einer Schenkel (40) im Wirkungsbereich eines
    durch die Mitte der Drehscheibe (10) verlaufenden Druckstiftes (12) angeordnet und durch eine Druckfeder (41) in Schwenkrichtung nach außen
belastet ist und deren jeweils anderer Schenkel
(42) im nach außen geschwenkten Zustand von
unten her mit etwas Spiel an den Rand (19) der
Hülse (18) des Laschenhalteringes (13) anschlägt
und dadurch Hubbewegungen des mittigen Zapfens
(26) gegenüber der Hülse (18) ausschließt.

11. Zentralverschluß nach Anspruch 10, dadurch gekennzeichnet, daß der mittige Zapfen (26) unten
mit einem Federlager (33) versehen ist, zwischen
dem und dem Rand (19) der Hülse (18) eine den
Zapfen (26) umschließende Druckfeder (34) angeordnet
ist, die den Zapfen (26) mit einer Kraft beaufschlagt, welche in Richtung der Längsmittenachse
(A) des Verschlusses nach unten zum Laschenhaltering (13) gerichtet ist und den mit dem Zapfen
(26) und der Drehscheibe (10) in Verbindung
stehenden Auswerferring (32) in die Rinne (14)
des Laschenhalteringes (13) hineindrückt.

12. Zentralverschluß nach Anspruch 11, dadurch gekennzeichnet, daß der mittige Zapfen (26) im Bereich
des Randes (19) der Hülse (18) mit Spiel gelagert
ist, so daß der Zapfen (26) mit dem Flansch
(28) und dem Auswerferring (32) taumelfähig
ist, und daß der Zapfen (26) im Anschluß an
den Spielbereich kegelstumpfförmig erweitert
ist und in einen zylindrischen Abschnitt (46)
übergeht, der dem Innenmaß des Randes (19) entspricht und bei entsprechendem Aushub des Zapfens
(26) aus der Hülse (18) eine Geradführung hervorruft.

13. Zentralverschluß nach Anspruch 8 und 9, dadurch
gekennzeichnet, daß jede an der Hülse (18) ausge-

0 161 664

bildete Kurve (24) mit einer Querrille o. dgl.
versehen ist, in die der jeweilige Nocken (25)
beim Verdrehen des mittigen Zapfens (26, 27,
28) einläuft, so daß an der Drehscheibe (10)
bei entsprechendem Verdrehen ein Druckpunkt
spürbar wird, und daß der mittige Zapfen (26)
mit Vorsprüngen (nicht dargestellt) versehen
ist, die den Enden der äußeren Schenkel (42)
der Schwenkriegel (38) in deren gespreizter
Stellung entsprechen, wobei sich die Querrillen
an solchen Stellen der Kurven (24) befinden,
die einer verdrehten Stellung des Zapfens (26)
gegenüber der Hülse (18) mit Rand (19) entsprechen,
in der die Vorsprünge durch Einbuchtungen (20)
des Randes (19) nach oben hindurchtreten können.

14. Zentralverschluß nach Anspruch 13, dadurch gekennzeichnet, daß der Rand (19) vier Aussparungen
oder Einbuchtungen (20) und vier vorspringende
Abschnitte (21, 22) aufweist.

15. Zentralverschluß nach Anspruch 1, dadurch gekennzeichnet, daß das Rückhalte- und Freigabeelement
(Auswerferring 32) als ein in radialer Richtung
offenes U-Profil ausgebildet ist, dessen lichte
Weite in Richtung der Längsmittenachse (A) des
Verschlusses dem Hakenmaß der Gurtanschlußstücke
entspricht.

16. Zentrlverschluß insbesondere nach einem der
Ansprüche 1 - 15, dadurch gekennzeichnet, daß
an der Drehscheibe (10) über den für die Einzelauslösung vorgesehenen Anschlußstücken eine
Griffmulde (50) ausgebildet ist.

BAD ORIGINAL

Zusammenfassung

**Fig.1**

**Fig.2**

Fig. 4

16  17  15  14  23  21 20 22  18  19  24  14  16

24  14  A  13

Fig. 3

22

14

16

23

17

23

20

19

20

21

15

19

24

22

IV

IV

# Fig. 5

# Fig. 6

0 161 664

Fig. 7

Fig. 8